# EUROPEAN PATENT APPLICATION

(11) **EP 3 584 106 A1**
(43) Date of publication of application: **25.12.2019**
(21) Application number: 18178609.6
(22) Date of filing: 19.06.2018
(51) Int. Cl.: B60L 1/02, B60L 3/00, B60L 11/18

(54) **PREDICTIVE REMOTE THERMAL MANAGMENT**

(71) Applicant: EINRIDE AB, 411 29 Göteborg (SE)
(72) Inventor: FUTTER, Christoph, 113 41 Stockholm (SE)
(74) Representative: AWA Sweden AB

(57) **Abstract**

The present invention relates to a battery thermal management system for an electric vehicle, and to a method and vehicle control system. More specifically, the battery thermal management system comprises a communication unit for transmitting and receiving data packets, a control unit connected to the communication unit. The control unit is configured to retrieve vehicle diagnostic data from a plurality of electric vehicles, the data comprising a battery temperature. Furthermore, the control unit is configured to retrieve a planned route of a first vehicle, and environmental data associated with the planned route, determine a thermal management scheme for the first vehicle based on the vehicle diagnostic data and the environmental data. The thermal management scheme comprising instructions for controlling heating and/or cooling of the traction battery pack of the first vehicle. The inventive system allows for precise predictions of the thermal load for traction batteries of electric vehicles, and therefore improved thermal management which reduces maintenance requirements and prolongs the expected lifetime of the electric vehicle.

## Description

### TECHNICAL FIELD OF THE INVENTION

The present invention relates generally to a predictive management system for electric vehicles, and more particularly to predictive thermal management of battery packs in electrical autonomous and semi-autonomous vehicles.

### BACKGROUND

In many industries (e.g. automotive, transport, industrial trucks, etc.) vehicles are being developed with a goal of reducing or eliminating the consumption of fossil fuels. Thus, no one can have escaped the growing, and nowadays global, trend of replacing the traditional fossil fuel powered car with an electric version. In general, electric vehicles differ from conventional motor vehicle vehicles in that they are selectively driven by one or more battery powered electric machines, while conventional motor vehicles rely exclusively on the internal combustion engine to power the vehicle.

Typically, a high voltage battery pack, at least partly, powers the electric machines and other electrical loads of the electric vehicle. The battery pack includes a plurality of battery cells which must be periodically recharged to replenish the energy necessary to power these loads. During operation, such as charging and discharging, the battery cells generate heat which must be managed. Thus, battery thermal management systems are an important factor in order ensure reliable operation of the electric vehicle, since they are used to manage the detrimental effects of the heat generated by the battery cells.

In more detail, in order to maximize the lifetime and performance of an electric vehicle battery (may also be known as a traction battery), the temperatures of the cells should be carefully monitored and controlled. Temperature control can be achieved by a heat transfer medium that might be in a gaseous, liquid, supercritical state or undergo a phase transition. Heat is added or removed either passively through thermal contact with the environment or actively by a heating device, a refrigeration system, or a combination of both. For monitoring purposes, a battery pack may be equipped with a set of sensors for the measurement of various physical or even chemical properties. The signals delivered by these sensors are processed by an onboard computer, where a control strategy is devised that is then executed by the active components.

A disadvantage of conventional approaches is that it can only act on a given environmental setting, which means that conditions that require changes in cooling or heating power are only detected once they occur. Since thermal processes are slow compared to electrical ones, stabilization of temperatures often must be achieved by excessive cooling or heating power.

Thus, there is a need for new and improved battery thermal management systems in the art.

### SUMMARY OF THE INVENTION

It is accordingly an object of the present invention to provide a battery thermal management system for an electrified vehicle comprising a traction battery pack, and an on-board vehicle control system for monitoring and controlling a temperature of a traction battery pack of an electric vehicle, which alleviate all or at least some of the above-discussed drawbacks of presently known systems.

Moreover, it is an object of the present invention to provide a battery thermal management system and a vehicle control system which are more proactive than presently known systems, and more efficient in terms of data management.

These objects are achieved by means of a battery thermal management system and a vehicle control system as defined in the appended claims.

The term exemplary is in the present context to be understood as an example, instance or illustration.

According to a first aspect of the present invention, there is provided a battery thermal management system for an electrified vehicle comprising a traction battery pack, the system comprising:
a communication unit for transmitting and receiving data packets (e.g. to and from a remote data repository);
a control unit connected to the communication unit, the control unit being configured to:
   retrieve vehicle diagnostic data from a plurality of electric vehicles, the vehicle diagnostic data comprising a temperature of each traction battery pack of each electric vehicle;
   retrieve a planned route for a first electric vehicle, and environmental data associated with a geographical location of the planned route, the environmental data including weather forecast and topographic data for the planned route;
   determine a thermal management scheme for the first electric vehicle based on the vehicle diagnostic data and the environmental data, the thermal management scheme comprising computer executable instructions for controlling heating and/or cooling of a traction battery pack of the first electric vehicle;
   transmit the thermal management scheme to the first electric vehicle.

Hereby presenting a battery thermal management system which is arranged to accurately predict the thermal management needs of a traction battery and thereby reduce maintenance requirements and prolong the expected lifetime of the electric vehicle, and consequently reduce costs and environmental tear.

The control unit may be realized as a software controlled processor. However, the controller may alternatively be realized wholly or partly in hardware.

The present invention is based on the realization that with the advent of fleets of autonomous electric vehicles that are monitored and controlled from a central entity, a centralized control strategy becomes possible. The thermal management strategy is no longer limited to the vehicles onboard data acquisition- and processing-systems, but can instead be calculated from a dedicated system that might use input data unavailable to the individual vehicles, or simply to optimize computation resources onboard the vehicle.

Moreover, the present inventor realized that by changing the input to the onboard thermal control system from a local sensor set to a remotely managed predictive thermal management system, and thereby make it proactive instead of reactive, the demand of cooling and heating energy can be forecast before the actual thermal load condition occurs. The introduction of a remote thermal management system, that can forecast the cooling or heating demand from a set of input data, could improve temperature stability and thus lifetime and performance of an traction battery pack of the vehicle. At the same tiem it could potentially save energy and costs due to the reduction in advanced sensing equipment, reduced requirements on the onboard computing resources and reduced data traffic. In more detail, by using a central entity computational resources can be better managed and data traffic can be reduced. For example, if several vehicles (connected to the same thermal management system) are taking the same route, the number of calculations can be reduced since parameters are identical or at least very similar for several vehicles. Also, no huge datasets like weather or traffic data have to be transferred to every vehicle, but these datasets are handled by a centralized system.

In accordance with an exemplary embodiment of the present invention, the vehicle diagnostics data further comprises information about cargo weight and cargo distribution of the electric vehicles. By using dynamic parameters such as cargo weight and cargo distribution as input data, the system is made particularly suitable for transport vehicles (e.g. trucks), and capable of making better predictions of the expected temperature of the battery pack throughout the planned route.

Further, in accordance with another exemplary embodiment of the present invention, the weather forecast includes at least one of temperature, solar irradiance, and humidity. Each of these parameters may influences the thermal load on the traction battery of the vehicle. Preferably, the weather forecast includes each one of temperature, solar irradiance, and humidity. Moreover, in accordance with another exemplary embodiment, the vehicle diagnostic data comprises data comprises at least one of a state of charge of each traction battery pack, a state of health of each traction battery pack, ***more examples.*** By including a state of charge of the battery pack and/or the state of health of the battery pack the thermal management scheme is even further optimized and tailored for each individual vehicle. Instead of just basing the thermal management scheme on the expected load based on a specific route and the current weather, it was realized that the battery status also affects the actual need for cooling and/or heating of the battery pack. Thus, the overall battery life may be further improved.

Even further, in accordance with yet another exemplary embodiment of the present invention, the control unit is further configured to retrieve traffic data associated with the planned route, and wherein the thermal management scheme is further based on the traffic data. By including traffic data, which may be retrieved from any automatic traffic surveillance system, the thermal load predictions can be more precise, wherefore the computed thermal management scheme can be even more accurate. For example, during rush-hour there may be many congestions along the planned route, resulting in an increased degree of idling which can affect the predicted thermal load. A traffic surveillance system is to be construed as a system capable of providing traffic conditions in real time, for example by analysing the GPS-determined locations retrieved from a large number of mobile phone users and calculating the speed of these users along a length of road.

Moreover, in accordance an exemplary embodiment of the present invention, the battery thermal management system further comprises a data storage unit comprising historical data, the historical data comprising historical thermal management schemes, and wherein the thermal management scheme for the first electric vehicle is further based on the historical data. By using historical data, i.e. previously executed thermal management schemes and the corresponding results (e.g. resulting range, and overall health of the battery pack), the battery thermal management system can be self-improving do some extent and the overall results further improved.

Further, in accordance with a second aspect of the present invention, there is provided a method for thermal management of a traction battery pack of an electric vehicle, the method comprising:
retrieving vehicle diagnostic data from a plurality of electric vehicles, the vehicle diagnostic data comprising a temperature of each traction battery pack of each electric vehicle;
retrieving a planned route for a first electric vehicle, and environmental data associated with a geographical location of the planned route, the environmental data including weather forecast and topographic data for the planned route;
determining a thermal management scheme for the first electric vehicle based on the vehicle diagnostic data and the environmental data;
heating and/or cooling the traction battery pack of the first electric vehicle based on the determined thermal management scheme.

With this aspect of the invention preferred features and advantages of the invention are readily available as in the previously discussed first aspect of the invention, and vice versa.

For example, the method may further comprise retrieving historical data comprising historical thermal management schemes, and wherein the step of determining a thermal management scheme for the first electric vehicle based on the vehicle diagnostic data, the environmental data and the historical thermal management data. The historical management data may be related to that specific first electric vehicle, or may be related to other electric vehicles. For example, the historical thermal management data may comprise previous thermal management schemes applied on/by electric vehicles along the same route. This may be particularly useful in transport applications where similar vehicles repeat the same routes a large number of times.

Yet further, in accordance with another aspect of the present invention, there is provided a vehicle control system for monitoring and controlling a temperature of a traction battery pack of an electric vehicle, the vehicle control system comprising:
communication circuitry for transmitting and receiving data packets to and from a battery thermal management system according to any one of the embodiments of the first aspect of the invention;
a temperature sensor for determining the temperature of the traction battery pack;
a temperature control arrangement for controlling a temperature of the traction battery pack;
a controller connected to the communication circuitry, the temperature sensor, the heating arrangement and to the cooling arrangement, the controller being configured to:
   retrieve a planned route for the electric vehicle from a geolocation system of the vehicle or from a remote route planning entity;
   retrieve a thermal management scheme associated with the planned route from the battery thermal management system, the thermal management scheme comprising computer executable instructions for controlling heating and/or cooling the traction battery pack;
   control the heating arrangement and the cooling arrangement based on the retrieved thermal management scheme.

With this aspect of the invention preferred features and advantages of the invention are readily available as in the previously discussed aspects of the invention, and vice versa.

These and other features of the present invention will in the following be further clarified with reference to the embodiments described hereinafter.

### BRIEF DESCRIPTION OF THE DRAWINGS

These and other aspects of the present invention will now be described in more detail, with reference to the appended drawings showing exemplary embodiments of the present invention, wherein:
Fig. 1 is a schematic block representation of a battery thermal management system in accordance with an embodiment of the present invention;
Fig. 2 is a flow-chart representation of a method for thermal management of a traction battery pack of an electric vehicle, in accordance with an embodiment of the present invention;
Fig. 3 is a vehicle control system for monitoring and controlling a temperature of a traction battery pack of an electric vehicle, in accordance with an embodiment of the present invention.

### DETAILED DESCRIPTION

In the following detailed description, some embodiments of the present invention will be described. However, it is to be understood that features of the different embodiments are exchangeable between the embodiments and may be combined in different ways, unless anything else is specifically indicated. Even though in the following description, numerous details are set forth to provide a more thorough understanding of the present invention, it will be apparent to one skilled in the art that the present invention may be practiced without these details. In other instances, well known constructions or functions are not described in detail, so as not to obscure the present invention.

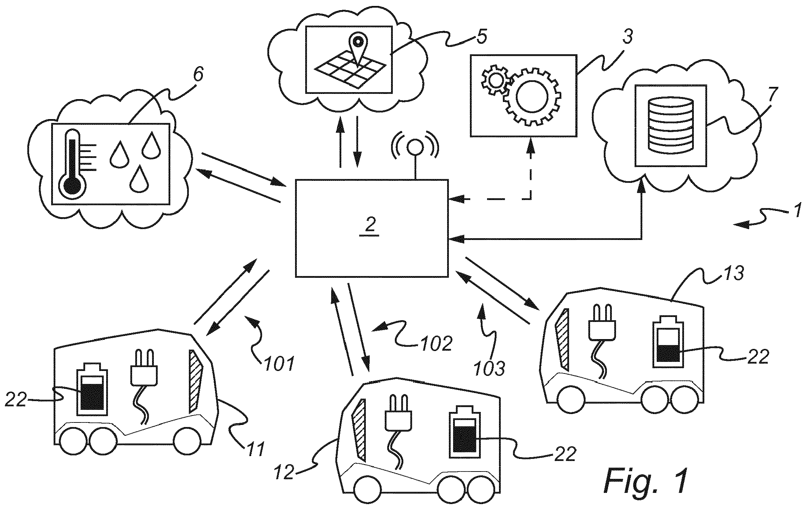

In Fig. 1 a schematic overview of a battery thermal management system 1 for an electric vehicle 11, 12, 13 having a traction battery pack 22 is shown. The battery thermal management system has a communication unit 2 for transmitting and receiving data packets to and from a remote data repository. In other words, the system 1 has a communication unit 2 for transmitting and receiving data packets to a remote stationary server 7 or client 11, 12, 13, for example through an exterior mobile network via one or more antennas associated with the communication unit.

In more detail, the communication unit 2 may for example comprise a router configured to use any available data links such as two or more of e.g. GSM, Satellite, DVB-T, HSPA, EDGE, 1x RTT, EVDO, LTE, WiFi (802.11) and WiMAX; and combine them into on virtual network connection. In particular it is preferred to use data links provided through wireless wide area network (WWAN) communication technologies. However, the communication unit 2 may also be configured to communicate with a remote stationary server via wired network connections as well.

Further, the battery thermal management system 1 comprises a control unit 3 connected to the communication unit 2. The control unit 3 is configured to retrieve 101, 102, 103 vehicle diagnostic data (via the communication unit 2) from a plurality of electric vehicles 11, 12, 13. The control unit 3 may be realized as a software controlled processor. However, the controller may alternatively be realized wholly or partly in hardware. For example, the control unit 3 may be realized as a plurality of computer processing units that together form the control unit 13, i.e. a plurality of computers may be interconnected in order to form the control unit and its functionality as disclosed herein.

The vehicle diagnostic data comprises at least a temperature of each traction battery pack 22 of each electric vehicle 11, 12, 13. However, the vehicle diagnostic data may additionally comprise information about cargo weight, cargo distribution of the electric vehicles 11, 12, 13, state of charge of each traction battery pack 22 and/or a state of health of each traction battery pack 22.

Moreover, the control unit 3 is further configured to retrieve a planned route for a first electric vehicle 11. The planned route may either be retrieved 101 from the vehicle data, or from a central route planning entity 5 associated with the first electric vehicle 11. The control unit 3 is further configured to retrieve environmental data associated with the first electric vehicle 11. In more detail, the environmental data 6 includes weather forecast 6 and topographic data (e.g. slopes, sharp turns, etc.) for the planned route. The weather forecast may for example include at least one of temperature, solar irradiance, and humidity. Each of these parameters may be considered to have a noteworthy effect on the battery temperature.

For example, in reference to the topographic data, if the route includes a relatively large number of inclinations, the required power output from the motor will be relatively high which results in an increased traction battery temperature due to the increased current output as compared to a relatively neutral (little to no slopes) route. In some embodiments, the control unit 3 may be further configured to retrieve traffic data (e.g. traffic load, accidents, congestions/traffic jams, other road blockages, etc.) associated with the planned route. The traffic data may for example be supplied by the central route planning entity 5.

Moving on, the control unit 3 is configured to determine a thermal management scheme for the first electric vehicle based on the retrieved vehicle diagnostic data and the retrieved environmental data. The thermal management scheme comprises computer executable instructions for controlling heating and/or cooling of the traction battery pack 22 of the first electric vehicle 11. The determined thermal management scheme is then transmitted to the first electric vehicle 11 by the control unit 3 via the communication unit 2.

In an example, the planned route may comprise a large number of hills or inclinations during its initial 30%, which would lead to an increased battery temperature, above an optimal temperature for maximizing current output and range. Assuming that the temperature would pass the predefined threshold temperature after completing approximately 10% of the route, it would be advisable to cool the traction battery pack ahead of the 10% mark. However, from the weather forecast it turns out that the outside temperature will drop shortly, and it is likely that the outside temperature will be sufficient to keep the battery within an optimum temperature range until the 25% mark. Thus, the inventive system allows for such considerations and the resulting thermal management scheme is capable of accounting for such factors, thereby avoiding unnecessary cooling of the traction battery pack which otherwise could have pushed the battery temperature below a lower threshold resulting in impaired output and range.

In an embodiment, the control unit 3 is configured to retrieve one or more stops at charging stations for the first electric vehicle 11 along the planned route. Further, the control unit 3 is configured to determine a thermal management scheme comprising computer executable instructions for controlling heating and/or cooling of a traction battery pack 22 of the first electric vehicle 11 such that the temperature of the traction battery pack 22 is within a predefined temperature range when the electric vehicle reaches a charging station. Advantageously, battery performance can be increased by charging the battery within a defined temperature range.

Moreover, by arranging the thermal management system 1 as a centralized system controlling a thermal management scheme for a plurality of vehicles, the data processing power can be increased as well as the data communication efficiency. In more detail, by avoiding local processors (within each vehicle) to retrieve large data sets (e.g. forecasts) and processes these, relatively large cost reductions can be readily achieved due to the increased data management efficiency. For example, a central unit can retrieve a forecast for a relatively large area covering a large number of planned routes for a large number of electric vehicles. Also, historical data can be stored and used for processing efficiency in a less complicated manner (e.g. vehicle B has performed route X a plurality of times, so when vehicle A is to perform route X for the first time, historical data for vehicle B may be utilized).

In more detail, the thermal management system 1 further has a data storage unit 7 which contains historical data comprising information about historical thermal management schemes. The data storage unit 7 may be a local unit associated with the control unit 3 or a remote data repository accessible via the communication unit 2. The historical thermal management schemes may for example be various thermal management schemes along different routes for a large number of vehicles. By storing thermal management schemes, and subsequently using this historical data for generating future thermal management schemes, the heating/cooling predictions can be more accurate (due to verified data) wherefore the thermal management schemes can be better optimized. The historical data may for example be used to form a self-learning algorithm in an Artificial Intelligence (Al) application.

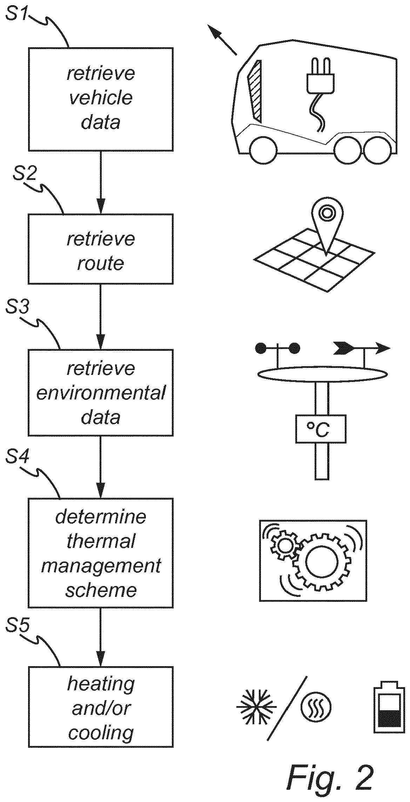

Fig. 2 shows a flow chart representation of a method for thermal management of a traction battery pack of an electric vehicle. The method includes a step of retrieving S1 vehicle diagnostic data from a plurality of electric vehicle. The vehicle diagnostic data comprises at least a temperature of the traction battery packs of each electric vehicle, but may however further comprise information about cargo weight, cargo distribution of the electric vehicles, state of charge of each traction battery pack, and/or a state of health of each traction battery pack.

Further, the method includes retrieving S2 a planned route for a first electric vehicle, and retrieving S3 environmental data associated with a geographical location of the planned route. The environmental data includes a weather forecast and topographic data of the planned route. The weather forecast includes at least one of current and expected temperature, current and expected solar irradiance, and current and expected humidity. The method further includes determining S4 a thermal management scheme for the first electric vehicle based on the vehicle diagnostic data and the environmental data. The thermal management scheme may be further determined S4 based on historical data comprising information about historical thermal management schemes, as discussed in the foregoing. Similarly, the thermal management scheme may be based on one or more planned stops along the planned route for charging the traction battery pack at charging stations, such that the temperature of the traction battery pack is within a predefined range when the first electric vehicle is estimated to recharge according to the planned route.

Further, the method includes heating and/or cooling S5 the traction battery pack of the first electric vehicle by means of a suitable heating or cooling arrangement provided within the electric vehicle, based on the determined thermal management scheme.

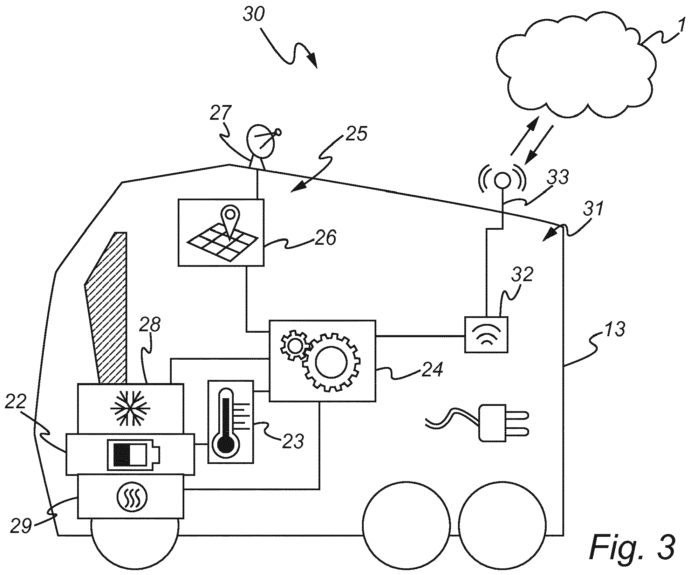

Fig. 3 is a schematic illustration of a vehicle control system 30 for monitoring and controlling a temperature of a traction battery pack of an electric vehicle 13, in accordance with an embodiment of the present invention. The vehicle control system 30 comprises communication circuitry 31 for transmitting and receiving data packets to and from a battery thermal management system 1, such as the one illustrated in Fig. 1. The communication circuitry 1 is here illustrated in the form of a data route 32 connected on an antenna 33. However, other realizations are feasible and readily understood by the skilled reader.

The vehicle control system 30 further comprises a temperature sensor 23 for determining a temperature of the traction battery pack 22, and a temperature control arrangement 28, 29 for controlling a temperature of the traction battery pack. The vehicle control system 30 further has a controller 24 connected to the communication circuitry 31, the temperature sensor 23, the heating arrangement 29, and the cooling arrangement 28. Temperature control can be achieved by a heat transfer medium that might be in a gaseous, liquid, supercritical state or undergo a phase transition. Heat is added or removed either passively through thermal contact with the environment or actively by a heating device, a refrigeration system, or a combination of both. For temperature monitoring purposes, a battery pack may be equipped with an arbitrarily complex set of sensors for the measurement of various physical or even chemical properties. The signals delivered by these sensors are processed by an on board computer (control unit 24).

The controller 24 is configured to retrieve a planned route for the electric vehicle 13 from a geolocation system 25 of the electric vehicle 13 or from a remote route planning entity (e.g. accessible via a centralized fleet management system). The internal geolocation system 25 may for example be a Global Navigation Satellite System (GNSS) such as GPS, GLONASS, Galileo, etc. having a local processing unit 26 and one or more antennas 27.

Further, the controller 24 is configured to retrieve a thermal management scheme associated with the retrieved planned route from the remote battery thermal management system 1. The thermal management scheme comprises computer executable instructions for controlling heating and/or cooling of the traction battery pack. Once the thermal management scheme is executed by the controller 24, it is configured to control the heating arrangement and the cooling arrangement based on the retrieved thermal management scheme.

The skilled person in the art realizes that the present invention by no means is limited to the embodiments described above. The features of the described embodiments may be combined in different ways, and many modifications and variations are possible within the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A battery thermal management system for an electric vehicle comprising a traction battery pack, said system comprising:
a communication unit for transmitting and receiving data packets;
a control unit connected to said communication unit, said control unit being configured to:
retrieve vehicle diagnostic data from a plurality of electric vehicles, said vehicle diagnostic data comprising a temperature of each traction battery pack of each electric vehicle;
retrieve a planned route for a first electric vehicle, and environmental data associated with a geographical location of the planned route, said environmental data including weather forecast and topographic data for said planned route;
determine a thermal management scheme for said first electric vehicle based on said vehicle diagnostic data and said environmental data, said thermal management scheme comprising computer executable instructions for controlling heating and/or cooling of a traction battery pack of said first electric vehicle;
transmit said thermal management scheme to said first electric vehicle.

2. The battery thermal management system according to claim 1, wherein said vehicle diagnostics data further comprises information about cargo weight and cargo distribution of said electric vehicles.

3. The battery thermal management system according to claim 1 or 2, wherein said weather forecast includes at least one of temperature, solar irradiance, and humidity.

4. The battery thermal management system according to any one of claims 1 - 3, wherein said control unit is further configured to retrieve traffic data associated with said planned route, and wherein said thermal management scheme is further based on said traffic data.

5. The battery thermal management system according to any one of the preceding claims, wherein said vehicle diagnostic data comprises at least one of a state of charge of each traction battery pack, a state of health of each traction battery pack.

6. The battery thermal management system according to any one of the preceding claims, further comprising a data storage unit comprising historical data, said historical data comprising historical thermal management schemes, and wherein said thermal management scheme for said first electric vehicle is further based on said historical data.

7. The battery thermal management system according to any one of the preceding claims, wherein said control unit is further configured to:
retrieve a predefined stop at a charging station along said planned route for said first electric vehicle;
determine said thermal management scheme further comprises computer executable instructions for controlling heating and/or cooling of the traction battery pack of said first electric vehicle such that said traction battery pack is within a predefined temperature range when said first electric vehicle reaches said predefined stop.

8. A method for thermal management of a traction battery pack of an electric vehicle, said method comprising:
retrieving vehicle diagnostic data from a plurality of electric vehicles, said vehicle diagnostic data comprising a temperature of each traction battery pack of each electric vehicle;
retrieving a planned route for a first electric vehicle, and environmental data associated with a geographical location of the planned route, said environmental data including weather forecast and topographic data for said planned route;
determining a thermal management scheme for said first electric vehicle based on said vehicle diagnostic data and said environmental data;
heating and/or cooling the traction battery pack of said first electric vehicle based on said determined thermal management scheme.

9. A vehicle control system for monitoring and controlling a temperature of a traction battery pack of an electric vehicle, said vehicle control system comprising:
communication circuitry for transmitting and receiving data packets to and from a battery thermal management system according to any one of claims 1 - 6;
a temperature sensor for determining the temperature of the traction battery pack;
a temperature control arrangement for controlling a temperature of said traction battery pack;
a controller connected to said communication circuitry, said temperature sensor, said heating arrangement and to said cooling arrangement, said controller being configured to:
retrieve a planned route for said electric vehicle from a geolocation system of the vehicle or from a remote route planning entity;
retrieve a thermal management scheme associated with said planned route from said battery thermal management system, said thermal management scheme comprising computer executable instructions for controlling heating and/or cooling said traction battery pack;
control said heating arrangement and said cooling arrangement based on said retrieved thermal management scheme.
